# EUROPÄISCHE PATENTSCHRIFT

(11) **EP 3 003 599 B1**
(45) Veröffentlichungstag und Bekanntmachung des Hinweises auf die Patenterteilung: **28.08.2019**
(21) Anmeldenummer: 14727818.8
(22) Anmeldetag: 02.06.2014
(51) Int. Cl.: B21K 23/00, B62D 25/08

(54) **VERFAHREN ZUR HERSTELLUNG EINES FEDERBEINDOMS**
METHOD OF PRODUCING A SUSPENSION LEG TURRET
PROCÉDÉ DE FABRICATION D'UN DÔME DE JAMBE DE FORCE

(30) Priorität: 06.06.2013 DE 102013105867
(43) Veröffentlichungstag der Anmeldung: 13.04.2016
(73) Patentinhaber: ThyssenKrupp Steel Europe AG, 47166 Duisburg (DE)
(72) Erfinder: ZÖRNACK, Markus, Lake Orion, MI 48362 (US); DREWES, Stephan, 41236 Mönchengladbach (DE)
(74) Vertreter: ThyssenKrupp Steel Europe AG
(86) Internationale Anmeldenummer: PCT/EP2014/061388
(87) Internationale Veröffentlichungsnummer: WO 2014/195269

(56) Entgegenhaltungen:
- DE-A1-102005 043 948
- DE-A1-102011 109 466
- DE-A1-102012 015 149
- DE-U1-202009 000 455

## Beschreibung

Die Erfindung betrifft ein Verfahren zur Herstellung eines Federbeindoms mit einem Domelement als separates Teil der Karosserie sowie einen Federbeindom mit einem Domelement wobei ein Halbzeug mittels einer Massivumformung auf die Form des Domelementes umgeformt wird. Daneben betrifft die Erfindung einen Verbund aus einem erfindungsgemäßen Federbeindom und mindestens einem angrenzenden Bauteil der Karosserie.

Um ein möglichst geringes Gewicht des Bauteils zu gewährleisten, können Federbeindome mit komplexen Strukturen in Gießprozessen hergestellt werden, wobei die Federbeindome vorzugsweise aus einem Leichtmetall wie Aluminium oder einer Aluminiumlegierung bestehen. Ein genereller Vorteil des Gießverfahrens ist die Freiheit der Materialverteilung sowohl hinsichtlich der Wandstärke des gegossenen Werkstückes als auch bezüglich der Form der hergestellten Bauteile. Insbesondere Bauteile mit komplexen Strukturen, beispielsweise die Steifigkeit des Bauteils erhöhende Strukturen, können belastungsgerecht bereitgestellt werden. Ein mittels eines Gießverfahrens hergestelltes Bauteil weist aber auch Nachteile auf. Oberflächenfehler, wie beispielsweise Risse, Poren oder Fehlstellen, schwächen das Bauteil und Anbindungsflächen müssen nach dem Gießen mechanisch nachbearbeitet werden. Des Weiteren können im Inneren der Bauteile Hohlräume durch einen Gaseinschluss während des Gießens entstehen, wodurch das hergestellte Bauteil mangelhafte mechanische Eigenschaften aufweist. Innere Defekte sind häufig die Ursache für Ermüdungsrisse. Daneben verursachen Lufteinschlüsse im Material Probleme bei der Wärmebehandlung von Bauteilen. Durch die Erwärmung dehnt sich das eingeschlossene Gas aus und bildet Blasen insbesondere an der Bauteiloberfläche, welche die mechanischen Eigenschaften des Bauteils ebenfalls herabsetzen.

Als Alternative zur Herstellung von Bauteilen mittels Gussverfahren ist aus dem Stand der Technik die Massivumformung von Metallblechen bekannt. Unter der Massivumformung wird im Sinne der vorliegenden Erfindung ein spanloses Umformen eines Halbzeugs verstanden, wobei während des Formens eine Änderung sowohl hinsichtlich der Wandstärke als auch der Form des Querschnitts des Halbzeugs erfolgt. Unter Halbzeug ist hier zu verstehen, dass es sich um ein Blech, eine Platine oder aber auch um ein vorgeformtes Teil, beispielsweise Tiefziehteil handeln kann. Das Tiefziehteil kann endgeometrienah oder auch bereits in der Endgeometrie vorliegen. Bei endgeometriennahen Halbzeugen wird durch das Verfahren eine Kalibrierung der Endgeometrie durchgeführt und gleichzeitig werden steifigkeitserhöhende Strukturen, beispielsweise Rippen, Sicken und/oder sonstige lokale Geometrien ausgebildet. Bei Tiefziehteilen mit Endgeometrie werden die lokalen steifigkeitserhöhenden Strukturen in einem separaten Schritt durchgeführt. Ein Verfahren zur Herstellung eines Halbzeugs, insbesondere einer Platine mit variierender Wandstärke ist beispielsweise aus der DE 103 03 184 B1 bekannt. Dabei hat die Massivumformung von Bauteilen den Vorteil, dass das gefertigte Bauteil keine inneren Schwachstellen aufweist und sich insofern durch bessere mechanische Eigenschaften auszeichnet. Massivumformteile weisen insbesondere eine höhere Festigkeit und Belastbarkeit im Vergleich zu Gussteilen auf. Darüber hinaus fällt im Vergleich zu konventionellen spanabhebenden Verfahren zur Veränderung, insbesondere zur Reduzierung der Wanddicke kein Materialverlust an. Aus der Offenlegungsschrift DE 10 2012 001 045 A1 ist beispielsweise ein Längsträger bekannt, welcher durch Massivumformung hergestellt ist und welcher im Bereich des Federbeins ein Domelement bildet. Ein solcher Federbeindom ist in die Karosserie integriert, so dass beispielsweise ein Austauschen des Federbeindoms gleichzeitig den Austausch des Längsträgers bedingt.

Konventionell sind Federbeindomen in Schalenbauweise im Automobilbau im Einsatz. Um den erforderlichen mechanischen Eigenschaften gerecht zu werden, sind unter anderem lokal Materialdoppelungen erforderlich, wodurch insbesondere die Zahl der verwandten Teile ansteigt und auch der Fügeaufwand zur Verbindung der einzelnen Schalen bzw. Tiefziehteile zunimmt.

Ein gattungsgemäßer Federbeindom sowie ein Verfahren zu seiner Herstellung sind in der DE 10 2005 043 948 A1 offenbart.

Ausgehend von dem zuvor dargestellten Stand der Technik liegt der vorliegenden Erfindung die Aufgabe zugrunde, ein Verfahren anzugeben, durch welches die Prozesssicherheit der Herstellung von Federbeindomen erhöht werden kann und die erforderlichen mechanischen Eigenschaften eines Federbeindoms bei reduzierter Teilezahl und/oder reduzierter Wandstärke der Bauteile erhalten werden können. Darüber hinaus liegt der Erfindung die Aufgabe zugrunde, einen Federbeindom und einen Verbund aus einem Federbeindom und mindestens einem angrenzenden Bauteil anzugeben, welcher die erforderlichen mechanischen Eigenschaften bei reduzierter Teilezahl und/oder reduzierter Wandstärke aufweist.

Gemäß einer ersten Lehre der vorliegenden Erfindung wird diese Aufgabe durch ein Verfahren zur Herstellung eines Federbeindoms mit einem Domelement als separates Teil der Karosserie dadurch gelöst, dass durch die Massivumformung zusätzlich die Steifigkeit erhöhende Strukturen in das Domelement eingebracht werden, wobei zur Erhöhung der Steifigkeit Bereiche mit vergrößerter Wanddicke in das Domelement eingebracht werden. Es wurde erkannt, dass eine dem Gussverfahren ähnliche und ähnlich komplexe Struktur des Federbeindoms auch durch eine Massivumformung hergestellt werden kann. In der Folge weist der Federbeindom die eingangs genannten vorteilhaften Eigenschaften von massiv umgeformten Bauteilen auf. Die Fehleranfälligkeit der hergestellten Federbeindome kann so im Vergleich zu Federbeindomen, welche mittels eines Gußverfahrens hergestellt werden, reduziert und die Prozesssicherheit des Herstellungsverfahrens erhöht werden. Zudem werden erfindungsgemäß zusätzliche, die Steifigkeit des Federbeindoms erhöhende Strukturen durch die Massivumformung in das Domelement eingebracht. Das Domelement dient dabei der Aufnahme des Federbeins. In der Folge können die erforderlichen mechanischen Eigenschaften des Federbeindoms bei reduzierter Teilezahl und/oder reduzierter Wandstärke gewährleistet werden. Insgesamt kann dieses Ergebnis zum einen auf das Herstellungsverfahrens mittels einer Massivumformung an sich und zum anderen auf das Vorhandensein zusätzlicher, die Steifigkeit erhöhende Strukturen zurückgeführt werden. Durch das Vorhandensein der Bereiche mit vergrößerter Wanddicke können lokale Spannungen im Bauteil verteilt und damit abgebaut werden.

Gemäß einer ersten Ausgestaltung des erfindungsgemäßen Verfahrens werden zur Erhöhung der Steifigkeit Rippen oder Stege in das Domelement eingebracht. Besonders bevorzugt sind Rippen vorgesehen, welche sternförmig um den Abstützbereich des Federbeins angeordnet sind. Durch diese gleichmäßige und gleichförmige Anordnung der Rippen kann eine ausgezeichnete Verteilung von Spannungen im Material und damit ein hoher Spannungsabbau im Material gewährleistet werden.

Daneben ist es auch denkbar lokale, beispielsweise das Domelement umlaufende Materialverdickungen zur Erhöhung der Steifigkeit vorzusehen. Eine erhöhte Steifigkeit des hergestellten Federbeindoms lässt sich insbesondere durch eine Kombination verschiedener Strukturen erreichen.

Erfindungsgemäß wird das Halbzeug durch Walzen, Schmieden, Stauchen und/oder Pressen umgeformt, wodurch eine Änderung der Querschnittsform sowie eine Reduktion und Erhöhung der Wandstärke des Halbzeugs ermöglicht wird. Geeignet zur Herstellung von Federbeindomen sind demnach Zug-, Druck- und/oder Zug-Druck-Umformungen sowie auch eine Kombination von mindestens zwei solchen geeigneten Verfahren. Gemäß einer bevorzugten Ausführungsform des erfindungsgemäßen Verfahrens weist das Halbzeug, beispielsweise eine Platine, eine Dicke von insbesondere wenigstens 2 mm, vorzugsweise von wenigstens 3 mm auf. In vorteilhafter Weise entspricht die Dicke des Halbzeugs der kleinsten Wandstärke des massivumgeformten Bauteils, so dass während der Umformung lediglich ein Stauchen der Wandstärke stattfindet. Ebenfalls geeignet ist ein Verfahren, bei dem während der Umformung die Wandstärke bereichsweise gestaucht und bereichsweise gedehnt wird.

Die Temperatur kann während der Umformung einen entscheidenden Einfluss auf die geometrische Freiheit des Federbeindoms haben. Gemäß einer weiteren bevorzugten Ausgestaltung des erfindungsgemäßen Verfahrens wird die Platine vor der Massivumformung erwärmt, wodurch sich das Halbzeug leichter umformen lässt. Zudem kann das Halbzeug auch teilweise, vorzugsweise an den Stellen, welche stark umgeformt werden, erwärmt werden. Vorzugsweise ist das Halbzeug, beispielsweise die Platine einer Kaltumformung, beispielsweise einer Umformung bei Raumtemperatur, zur Herstellung der gewünschten Form beispielsweise einer Vorform zu unterziehen. In einem oder weiteren Schritten erfolgt die Massivumformung an der Vorform gezielt in den Bereichen, in denen die Steifigkeit erhöhende Strukturen eingebracht werden. Ferner kann im Zuge der Herstellung einer Vorform bzw. auch während der Massivumformung gezielt in den Bereichen die Wanddicke reduziert werden, die der Anbindung mit weiteren Teilen dienen. Um ein prozesssicheres Verbinden mit weiteren Bauteilen zu gewährleisten, insbesondere bei Verwendung von konventionellen Schweißverfahren, vorzugsweise beim Widerstandsschweißen, sollte die Wanddicke im Anbindungsbereich auf ≤ 1,5 mm reduziert werden. Hieraus ergeben sich die Vorteile, dass eine hohe Maßgenauigkeit und eine besonders hohe Festigkeit der hergestellten Federbeindome erreicht werden kann. Schließlich ist auch eine Halbwarmumformung unter Ausnutzung einer Kombination der Vorteile sowohl der Warm- als auch der Kaltumformung der Platine denkbar. Eine Halbwarmumformung findet vorzugsweise bei einer Temperatur zwischen 400 °C und 650 °C statt.

Gemäß einer nächsten bevorzugten Ausführungsform besteht das Halbzeug aus Stahl oder einer Stahllegierung. Besonders bevorzugt werden HD-Stähle (hochduktile Stähle) verwendet. Diese Stähle haben sehr gute Umformeigenschaften bei gleichzeitig hohen Festigkeiten, insbesondere bei der Kaltumformung. Zudem eignen sich auch Vergütungsstähle, da diese eine besonders hohe Festigkeit bereitstellen. Diese Aufzählung ist jedoch nicht abschließend, die Verwendung weitere Stähle oder Stahllegierungen für die Herstellung von Federbeindomen ist ebenfalls denkbar.

Vorzugsweise erfolgt die Anbindung des Federbeins an das mindestens eine angrenzende Bauteil mittels einer stoffschlüssigen Verbindung, bevorzugt mittels Schweißen, besonders bevorzugt mittels Widerstandsschweißen. Neben der stoffschlüssigen Verbindung ist auch eine Anbindung mittels eines Formschlusses denkbar.

Das angrenzende Bauteil kann beispielsweise der Längsträger des Kraftfahrzeugs sein. Zudem ist auch eine Verbindung mit weiteren, vorzugsweise tiefgezogenen Bauteilen denkbar. Durch die spezielle Ausgestaltung des weiteren Bauteils kann ferner Einfluss auf die Eigenschaften des Verbundes aus Federbeindom und dem weiteren Bauteil genommen werden.

Gemäß einer zweiten Lehre der vorliegenden Erfindung wird die eingangs genannte Aufgabe durch einen Federbeindom mit einem Domelement, hergestellt nach einem der zuvor beschriebenen Verfahren, wobei das Domelement als Massivumformteil ausgebildet ist, dadurch gelöst, dass das Domelement Strukturen zur Erhöhung der Steifigkeit aufweist, wobei das Domelement Bereiche mit vergrößerter Wanddicke zur Erhöhung der Steifigkeit aufweist. Durch die erfindungsgemäße Ausgestaltung als Massivumformteil weist der Federbeindom im Vergleich zu Gußbauteilen vergleichbare mechanische Eigenschaften auf, da die eingangs dargelegten Gußfehler erfolgreich vermieden werden können. Zudem kann durch das gezielte Einbringen von geeigneten Strukturen die Steifigkeit des Federbeindoms erhöht werden. In der Folge können durch einen erfindungsgemäßen Federbeindom gute mechanische Eigenschaften, insbesondere eine hohe Festigkeit, Steifigkeit und Belastbarkeit, aufgrund seines Herstellungsverfahrens und aufgrund der Ausgestaltung des Federbeindoms gewährleistet werden. Durch das Vorhandensein von Bereichen mit vergrößerter Wanddicke können Spannungen im Material verteilt und folglich abgebaut werden, was im Ergebnis zu einer höheren Steifigkeit des Bauteils beiträgt.

Besonders bevorzugt weist das Domelement Rippen oder Stege zur Erhöhung der Steifigkeit auf. Vorzugsweise sind Rippen vorgesehen, welche sternförmig um den Abstützbereich des Federbeins angeordnet sind, so dass die Verteilung von Spannungen im Material besonders gleichmäßig und effektiv erfolgen kann. Besonders bevorzugt ist es, wenn der Querschnitt der Rippen sich in Richtung des Abstützbereiches des Federbeins vergrößert. So kann speziell der Bereich des Federbeindoms, welcher besonders hohen Belastungen ausgesetzt ist, unterstützt werden. Daneben kann aber auch eine Vergrößerung des Querschnitts der Rippen im Bereich der Anbindung an weitere Bauteile vorgesehen sein, so dass im Anbindungsbereich eine möglichst hohe Steifigkeit bereitgestellt werden kann.

Neben dem Vorhandensein von Rippen ist es auch denkbar, dass das Domelement umlaufende Materialverdickungen zur Erhöhung der Steifigkeit aufweist. Insbesondere eine Kombination aus den beiden zuvor genannten Strukturen zur Erhöhung der Steifigkeit gewährleistet gute mechanische Eigenschaften des Federbeindoms.

Gemäß einer weiteren bevorzugten Ausgestaltung des erfindungsgemäßen Federbeindoms besteht das Domelement aus Stahl oder einer Stahllegierung. Besonders geeignet sind aufgrund ihrer hohen Festigkeit HD- oder Vergütungsstähle. Aber auch weitere Stähle können für die Herstellung eines erfindungsgemäßen Federbeindoms verwendet werden.

Zur Integration des Federbeindoms in die umgebende Fahrzeugstruktur weist das Domelement vorzugsweise Anbindungsbereiche für die Verbindung mit weiteren Elementen des Kraftfahrzeugs auf. Vorzugsweise wird die Verbindung durch eine stoffschlüssige Verbindung, insbesondere durch eine Schweißverbindung, besonders bevorzugt durch eine Verbindung mittels Widerstandsschweißen bereitgestellt. Selbstverständlich sind andere Arten der Verbindung, beispielsweise formschlüssige Verbindungen, mit der angrenzenden Fahrzeugstruktur ebenfalls geeignet.

Gemäß einer dritten Lehre der vorliegenden Erfindung wird die eingangs genannte Aufgabe durch einen Verbund aus einem erfindungsgemäßen Federbeindom und mindestens einem angrenzenden Bauteil des Kraftfahrzeugs, vorzugsweise einem Tiefziehteil, gelöst. Das mindestens eine angrenzende Bauteil kann als Karosserieteil, als Rahmenteil oder als weiteres Fahrzeugstrukturteil ausgebildet sein.

Durch die Ausgestaltung des weiteren Bauteils kann Einfluss auf die Eigenschaften des erfindungsgemäßen Verbundes genommen werden. Beispielsweise kann durch das Vorsehen von geeigneten Strukturen, insbesondere Vertiefungen beispielsweise in Form von Sicken oder Materialverdickungen die Steifigkeit des weiteren Bauteils und damit die Steifigkeit des Verbundes erhöht werden. Darüber hinaus kann durch das Vorsehen von Aussparungen in dem weiteren Bauteil Material eingespart werden.

Im Weiteren soll die Erfindung anhand von Ausführungsbeispielen in Verbindung mit der Zeichnung näher erläutert werden. Die Zeichnung zeigt in
- Fig. 1: ein erstes Ausführungsbeispiel des erfindungsgemäßen Federbeindoms sowie ein erstes Ausführungsbeispiel des erfindungsgemäßen Verbundes in perspektivischer Ansicht,
- Fig. 2: ein zweites Ausführungsbeispiel eines erfindungsgemäßen Federbeindoms sowie ein zweites Ausführungsbeispiel eines erfindungsgemäßen Verbundes,
- Fig. 3: das zweite Ausführungsbeispiel des erfindungsgemäßen Federbeindoms und des erfindungsgemäßen Verbundes im Querschnitt,
- Fig. 4: das zweite Ausführungsbeispiel des erfindungsgemäßen Federbeindoms und des erfindungsgemäßen Verbundes im Querschnitt,
- Fig. 5: ein erstes Ausführungsbeispiel eines erfindungsgemäßen Verfahrens zur Herstellung eines Federbeindoms.

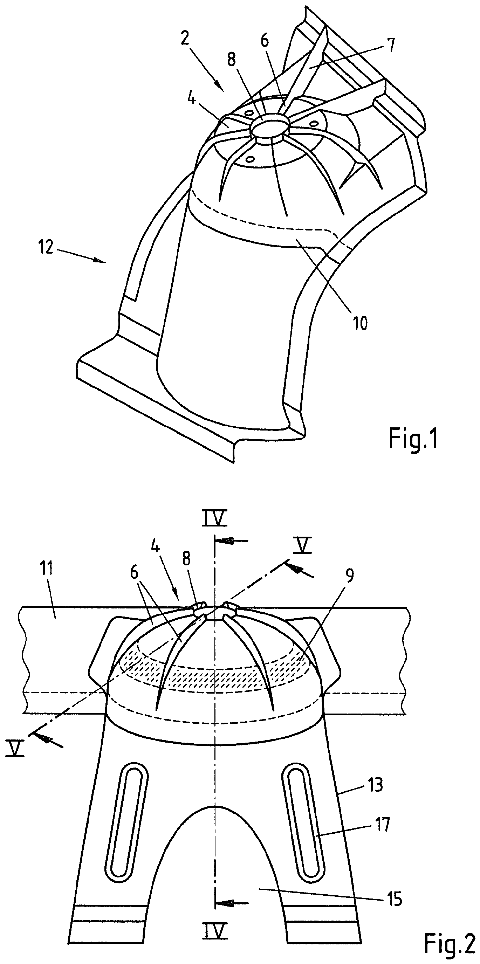

Fig. 1 zeigt ein erstes Ausführungsbeispiel des erfindungsgemäßen Federbeindoms 2 mit einem Domelement 4 in perspektivischer Ansicht. Erfindungsgemäß ist der dargestellte Federbeindom 2 durch eine Massivumformung, insbesondere durch eine Zug-, Druck oder Zugdruckumformung oder durch eine Kombination von mindestens zwei geeigneten Umformverfahren hergestellt. Folglich weist der in Fig. 2 gezeigte Federbeindom im Vergleich zu den aus dem Stand der Technik bekannten Federbeindomen vergleichbare Eigenschaften bei reduzierter Teilezahl und/oder reduzierter Wandstärken auf. Darüber hinaus weist das in Fig. 1 gezeigte Ausführungsbeispiel eines erfindungsgemäßen Federbeindoms Rippen 6 zur Erhöhung der Steifigkeit des Federbeindoms 2 auf. Durch das Vorhandensein der Rippen 6, welche sternförmig um den Abstützbereich 8 des Federbeins angeordnet sind, können Spannungen im Material verteilt und damit abgebaut werden, so dass in der Folge die Steifigkeit des Federbeindoms erhöht werden kann. Der Querschnitt der Rippen 6 erhöht sich im Bereich der Anbindung 7 an ein weiteres Bauteil, so dass in diesem Bereich eine besonders hohe Steifigkeit gewährleistet werden kann bzw. die globale Blechstärke des Bauteils verringert werden kann. Der dargestellte Federbeindom 2 besteht aus Stahl oder einer Stahllegierung, insbesondere aus einem HD- oder einem Vergütungsstahl. Mithin kann eine gute Umformbarkeit bei ausgezeichneten mechanischen Eigenschaften des hergestellten Federbeindoms 2 bereitgestellt werden. Über Anbindungsbereiche 10 ist der in Fig. 1 dargestellte Federbeindom 2 mit der angrenzenden Karosserie 12 verbunden. Dabei ist das angrenzende Karosserieteil 12 als Tiefziehteil ausgebildet. Eine entsprechende Verbindung erfolgt vorzugsweise mittels eines Schweißprozesses, insbesondere mittels Widerstandsschweißen. Das gezeigte Ausführungsbeispiel eines erfindungsgemäßen Federbeindoms kann demnach besonders einfach mit weiteren Bauteilen verbunden und damit in die Fahrzeugstruktur integriert werden.

Fig. 2 zeigt ein zweites Ausführungsbeispiel eines erfindungsgemäßen Federbeindoms 2 mit einem Domelement 4, welcher in die angrenzende Karosseriestruktur integriert ist. Auch das in Fig. 2 dargestellte Ausführungsbeispiel eines erfindungsgemäßen Federbeindoms ist mittels eines Massivumformverfahrens hergestellt und weist Rippen 6 zur Erhöhung der Steifigkeit des Federbeindoms 2 auf. Die Rippen 6 sind ebenfalls sternförmig um den Abstützbereich 8 des Federbeins angeordnet. Durch diese gleichmäßige und gleichförmige Anordnung der Rippen 6 kann ein optimaler Spannungsabbau im Material gewährleistet werden. Im Unterschied zu dem zuvor dargestellten Ausführungsbeispiel des erfindungsgemäßen Federbeindoms weisen die Rippen 6 im Abstützbereich des Federbeins einen erhöhten Querschnitt auf. Darüber hinaus weist das in Fig. 2 gezeigte Ausführungsbeispiel zusätzlich eine umlaufende Materialverdickung 9 auf, welche ebenfalls die Steifigkeit des Federbeindoms erhöht. Der Federbeindom ist zum einen mit dem Längsträger 11 verbunden und zum anderen mit einem tiefgezogenen Bauteil 13. Das Tiefziehteil 13 weist Aussparungen 15 zur Materialeinsparung und Sicken 17 zwecks Versteifung des Tiefziehteils auf.

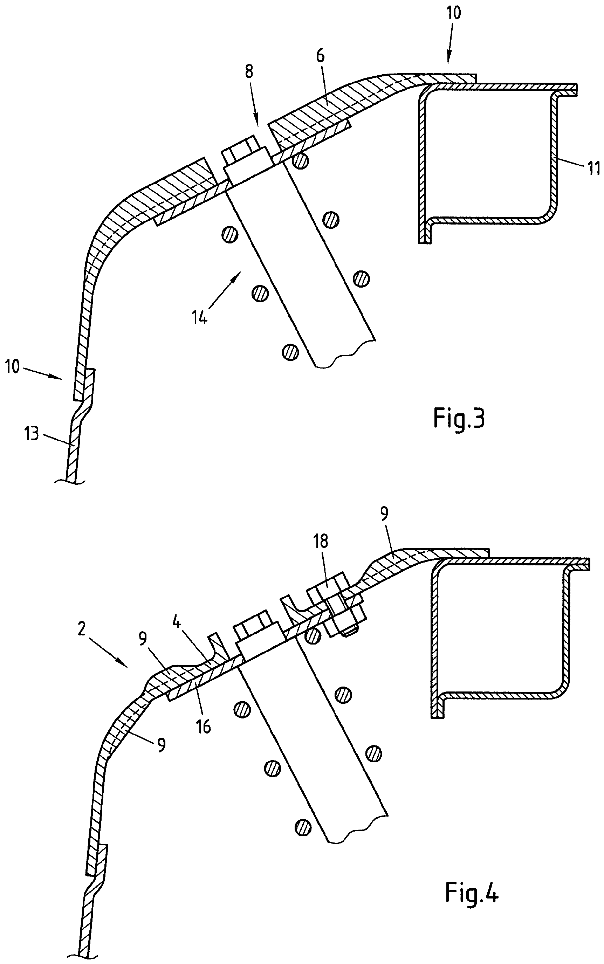

In Fig. 3 ist das in Fig. 2 dargestellte zweite Ausführungsbeispiel des erfindungsgemäßen Federbeindoms 2 im Querschnitt entlang der Querschnittslinie V-V dargestellt. In dem in Fig. 3 gezeigten Querschnitt sind deutlich die Rippen 6 zur Erhöhung des Steifigkeit des Federbeindoms 2 zu erkennen. Zur Bereitstellung einer belastungsgerechten Verteilung der Spannung im Material vergrößert sich der Rippenquerschnitt in Richtung des Abstützbereiches 8 des Federbeins 14. Folglich wird insbesondere in dem Bereich, welcher einer besonders hohen Belastung ausgesetzt ist, mehr Material für den Spannungsabbau bereitgestellt, was im Ergebnis eine belastungsgerechte Erhöhung der Steifigkeit bewirkt. Zudem zeigt der in Fig. 3 dargestellte Querschnitt Anbindungsbereiche 10 für die Verbindung mit weiteren Elementen 12, 11, 13 der den Federbeindom 2 umgebenden Fahrzeugstruktur. Die Wandstärke in den Anbindungsbereichen 10 wird vorzugsweise auf ≤ 1,5 mm reduziert, um prozesssicheres Verschweißen, insbesondere Widerstands- oder Laserschweißen zu gewährleisten.

Fig. 4 zeigt das in Fig. 2 dargestellte zweite Ausführungsbeispiel des erfindungsgemäßen Federbeindoms 2 im Querschnitt entlang der Querschnittslinie IV-IV. Der dargestellte Querschnitt betrifft im Unterschied zu dem in Fig. 3 gezeigten Querschnitt entlang der Linie V-V nicht den Bereich des Federbeindoms, welcher Rippen zur Erhöhung der Steifigkeit aufweist. Dagegen zeigt Fig. 4 eine umlaufende Materialverdickung 9 zur Erhöhung der Steifigkeit auf. Fig. 4 zeigt weiterhin, dass der Federbeinlagerteller 16 des Federbeins 14 beispielsweise mittels Schrauben 18 in den Bereichen, welche keine Rippen oder Materialverdickungen aufweisen an dem Domelement 4 des Federbeindoms 2, befestigt ist.

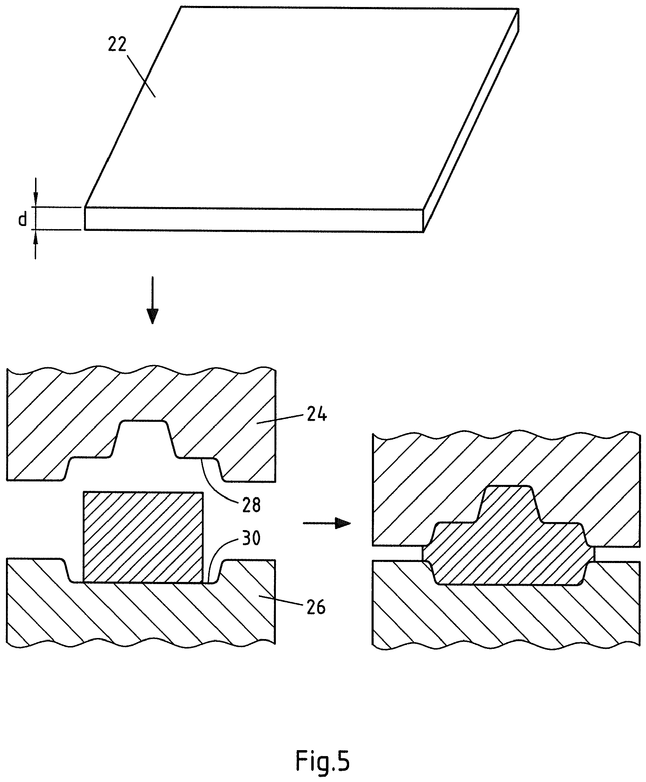

Fig. 5 zeigt ein erstes Ausführungsbeispiel eines erfindungsgemäßen Verfahrens zur Herstellung eines Federbeindoms. Gemäß dem in Fig. 5 gezeigten Verfahren wird der Federbeindom aus einer Platine 22 geformt, welche eine Dicke d von wenigstens 2 mm aufweist. Die Platine 22 wird zur Herstellung eines Federbeindoms einer Massivumformung, im vorliegenden Fall einem Gesenkschmieden unterzogen. Hierzu wird die Platine 22 in eine Gesenkschmiede, bestehend aus einem Obergesenk 24 und einem Untergesenk 26, gebracht. Die Innenkontur 28, 30 des Obergesenkes 24 und des Untergesenkes 26 entsprechen dem äußeren Profil des hergestellten Federbeindoms. Zur Umformung der Platine 22 wird diese zunächst in die Gesenkschmiede eingelegt, wobei das Obergesenk 24 und das Untergesenk 26 einen Abstand zueinander aufweisen, welcher größer als die Dicke der Platine 22 ist. Die Platine 22 kann vor dem Umformen erwärmt werden. Durch das nachfolgende Schließen der beiden Gesenkhälften 24 und 26 wird das Platinenmaterial auf die gewünschte Form umgeformt. Auf diese Weise kann ein Federbeindom hergestellt werden, welcher beliebig komplexe Strukturen, insbesondere Strukturen zur Erhöhung der Steifigkeit des Federbeindoms aufweist und der darüber hinaus die vorteilhaften Eigenschaften von massiv umgeformten Bauteilen aufweist.

## Patentansprüche

1. Verfahren zur Herstellung eines Federbeindoms (2) mit einem Domelement (4) als separates Teil der Karosserie, wobei ein Halbzeug mittels einer Massivumformung auf die Form des Domelementes (4) umgeformt wird, wobei durch die Massivumformung zusätzlich die Steifigkeit erhöhende Strukturen in das Domelement (4) eingebracht werden, wobei zur Erhöhung der Steifigkeit Bereiche mit vergrößerter Wanddicke eingebracht werden, **dadurch gekennzeichnet, dass** das Halbzeug durch Walzen, Schmieden, Stauchen und/oder Pressen umgeformt wird, welche eine Änderung der Querschnittsform sowie eine Reduktion und Erhöhung der Wandstärke des Halbzeugs ermöglichen.

2. Verfahren nach Anspruch 1,
**dadurch gekennzeichnet, dass**
zur Erhöhung der Steifigkeit Rippen (6) oder Stege in das Domelement (4) eingebracht werden.

3. Verfahren nach Anspruch 1 oder 2,
**dadurch gekennzeichnet, dass**
das Halbzeug eine Dicke von wenigstens 2 mm, vorzugsweise von wenigstens 3 mm, aufweist.

4. Verfahren nach einem der Ansprüche 1 bis 3,
**dadurch gekennzeichnet, dass**
das Halbzeug vor der Massivumformung erwärmt wird.

5. Verfahren nach einem der Ansprüche 1 bis 4,
**dadurch gekennzeichnet, dass**
das Halbzeug aus Stahl oder einer Stahllegierung besteht.

6. Federbeindom mit einem Domelement (4), welches als Massivumformteil ausgebildet ist und Strukturen zur Erhöhung der Steifigkeit des Domelementes (4) aufweist, wobei das Domelement (4) Bereiche mit vergrößerter Wanddicke zur Erhöhung der Steifigkeit aufweist, **dadurch gekennzeichnet, dass** der Federbeindom nach einem Verfahren der Ansprüche 1 bis 5 hergestellt wurde.

7. Federbeindom nach Anspruch 6,
**dadurch gekennzeichnet, dass**
das Domelement (4) Rippen (6) oder Stege zur Erhöhung der Steifigkeit aufweist.

8. Federbeindom nach Anspruch 6 oder 7,
**dadurch gekennzeichnet, dass**
das Domelement (4) aus Stahl oder einer Stahllegierung besteht.

9. Federbeindom nach einem der Ansprüche 6 bis 8,
**dadurch gekennzeichnet, dass**
das Domelement (4) Anbindungsbereiche für die Verbindung mit weiteren Elementen des Kraftfahrzeugs aufweist.

10. Verbund aus einem Federbeindom gemäß einem der Ansprüche 6 bis 9 und mindestens einem angrenzenden Bauteil (11, 12, 13), vorzugsweise einem Tiefziehteil, des Kraftfahrzeugs.

## Claims

1. Method for producing a spring strut dome (2) having a dome element (4) as a separate part of the vehicle body, wherein a semifinished product is reshaped to the shape of the dome element (4) by means of massive forming, structures which increase the stiffness additionally being introduced into the dome element (4) by way of the massive forming, wherein regions with an increased wall thickness are introduced in order to increase the stiffness, **characterized in that** the semifinished product is reshaped by way of rolling, forging, upset-forging and/or pressing which make a change in the cross-sectional shape and a reduction and increase in the wall thickness of the semifinished product possible.

2. Method according to Claim 1, **characterized in that** ribs (6) or webs are introduced into the dome element (4) in order to increase the stiffness.

3. Method according to Claim 1 or 2, **characterized in that** the semifinished product has a thickness of at least 2 mm, preferably of at least 3 mm.

4. Method according to one of Claims 1 to 3, **characterized in that** the semifinished product is heated before the massive forming.

5. Method according to one of Claims 1 to 4, **characterized in that** the semifinished product consists of steel or a steel alloy.

6. Spring strut dome having a dome element (4) which is configured as a massive formed part and has structures for increasing the stiffness of the dome element (4), wherein the dome element (4) has regions with an increased wall thickness in order to increase the stiffness, **characterized in that** the spring strut dome has been produced according to a method of Claims 1 to 5.

7. Spring strut dome according to Claim 6, **characterized in that** the dome element (4) has ribs (6) or webs in order to increase the stiffness.

8. Spring strut dome according to Claim 6 or 7, **characterized in that** the dome element (4) consists of steel or a steel alloy.

9. Spring strut dome according to one of Claims 6 to 8, **characterized in that** the dome element (4) has attaching regions for connection to further elements of the motor vehicle.

10. Assembly comprising a spring strut dome according to one of Claims 6 to 9 and at least one adjoining component (11, 12, 13), preferably a deep-drawn part, of the motor vehicle.

## Revendications

1. Procédé de fabrication d'un dôme de jambe de force (2) avec un élément de dôme (4) comme partie séparée de la carrosserie, dans lequel on déforme un produit semi-fini au moyen d'une déformation massive à la forme de l'élément de dôme (4), dans lequel on réalise en outre dans l'élément de dôme (4) par la déformation massive des structures augmentant la rigidité, dans lequel pour augmenter la rigidité on introduit des zones avec une épaisseur de paroi accrue, **caractérisé en ce que** l'on déforme le produit semi-fini par laminage, forgeage, refoulement et/ou pressage, qui permettent un changement de la forme de section transversale ainsi qu'une réduction et une augmentation de l'épaisseur de paroi du produit semi-fini.

2. Procédé selon la revendication 1, **caractérisé en ce que** l'on réalise des ailettes (6) ou des nervures dans l'élément de dôme (4) pour augmenter la rigidité.

3. Procédé selon une revendication 1 ou 2, **caractérisé en ce que** le produit semi-fini présente une épaisseur d'au moins 2 mm, de préférence d'au moins 3 mm.

4. Procédé selon l'une quelconque des revendications 1 à 3, **caractérisé en ce que** l'on chauffe le produit semi-fini avant la déformation massive.

5. Procédé selon l'une quelconque des revendications 1 à 4, **caractérisé en ce que** le produit semi-fini est constitué d'acier ou d'un acier allié.

6. Dôme de jambe de force avec un élément de dôme (4), qui est réalisé sous forme de pièce massivement déformée et qui présente des structures pour augmenter la rigidité de l'élément de dôme (4), dans lequel l'élément de dôme (4) présente des zones d'épaisseur de paroi accrue pour l'augmentation de la rigidité, **caractérisé en ce que** le dôme de jambe de force a été fabriqué par un procédé selon l'une quelconque des revendications 1 à 5.

7. Dôme de jambe de force selon la revendication 6, **caractérisé en ce que** l'élément de dôme (4) présente des ailettes (6) ou des nervures pour augmenter la rigidité.

8. Dôme de jambe de force selon une revendication 6 ou 7, **caractérisé en ce que** l'élément de dôme (4) est constitué d'acier ou d'un acier allié.

9. Dôme de jambe de force selon l'une quelconque des revendications 6 à 8, **caractérisé en ce que** l'élément de dôme (4) présente des zones de liaison pour la liaison à d'autres éléments du véhicule automobile.

10. Ensemble composé d'un dôme de jambe de force selon l'une quelconque des revendications 6 à 9 et d'au moins un composant adjacent (11, 12, 13), par exemple une pièce emboutie, du véhicule automobile.
